# EUROPEAN PATENT SPECIFICATION

(11) **EP 0 860 922 B1**
(45) Date of publication and mention of the grant of the patent: **10.04.2002**
(21) Application number: 98850004.7
(22) Date of filing: 15.01.1998
(51) Int. Cl.: H02G 3/06

(54) **Duct junction**
Kanalverbindung
Jonction de canalisation

(30) Priority: 19.02.1997 SE 9700569
(43) Date of publication of application: 26.08.1998
(73) Proprietor: THORSMAN & CO AB, S-611 29 Nyköping (SE)
(72) Inventor: Karlberg-Oddy, Mats Gunnar, 611 63 Nyköping (SE); Groot, Cornelis, 1624 VC Hoorn (NL); Bulder, Hendrik, 1814 GG Alkmar (NL)
(74) Representative: Karlsson, Leif Karl Gunnar

(56) References cited:
- FR-A- 2 734 955
- GB-A- 1 493 410
- US-A- 3 603 625

## Description

The present invention relates to a duct junction for distribution of cables between two connecting perpendicular ducts, each of which showing a mainly U-shaped cross section comprising two sides and one bottom in between and one open side intended to be covered with a front panel, a first duct showing one or more apertures in that side to which a second duct connects with its short side.

### BACKGROUND TECHNIQUES

Ducts of the kind as described in the preamble usually are mounted with the bottoms attached to a wall and intended for the distribution of e.g. electric cables, telephone cables and computer cables leading to and between workrooms. In a duct junction where a duct with less depth is connected to the side of a duct with greater depth apertures are usually made in the side of the larger duct, the apertures being placed to be covered by the cross section of the minor duct. The cables then have to be threaded through these apertures from the larger duct to the minor duct and vice versa which partly is difficult and partly may damage the covering of the cables.

The British patent publication GB 1-A-1493410 describes a duct junction between two U-shaped ducts showing the same depth, wherein an aperture is arranged in one flange of one of the ducts, which aperture is covered by the cross section of the other duct abutting upon the first one. The depth of the flanges is the same for the two ducts. A T-shaped connector showing sides or flanges, which are extending along the flanges of the two ducts, is covering the junction outwardly. This type of connector, designed with a flat outer side, can not be used if a duct with a smaller depth abuts a duct with a bigger depth. The duct junction according to the invention is intended to overcome this problem.

### DESCRIPTION OF THE INVENTION

The object of the present invention is to achieve a duct junction according to the preamble which allows the distribution of cables from a first duct to a branched off second duct without any need to be threaded through apertures in the side of the first duct. The object is achieved with the present invention in that the first duct shows an aperture extending to the front opening in this duct, the section of the aperture being outside the cross section of the second duct being covered by a front plate. The side of the first duct is of greater depth than the side of the second duct, the front plate showing partly a back part connecting to the front panel in the second duct and partly a fore part with a cross section profile which coincides with the cross section profile at the free edge of the side being in close contact of the first duct. Due to the fact that the aperture in the first duct extends all the way to the elongated opening in this duct, cables may be distributed between the ducts without any need to be threaded through apertures. In addition, it is achieved by means of the front plate according to the invention that the aperture referred to may be covered with a prefabricated member of high finish that allows the aperture itself not needs to be made with the same finish but may be made in situ when setting up the ducts. That applies particularly when a new second duct is to be connected to an available first duct.

It lies within the scope of the invention to design the ducts with other cross-sectional shapes than the U-shape mentioned above. Yet, the ducts have in common that they have an open side that is intended to be covered with a front panel. It also lies within the scope of the invention to let the front plate be a part of the front panel for the other duct even if a separate front plate is to prefer from the mounting point of view.

Further features and characteristics concerning the present invention are evident from the description to the drawings subsequently and from the claims.

### DESCRIPTION TO THE DRAWINGS

The invention is described subsequently as an example of an embodiment in connection with the enclosed drawings.

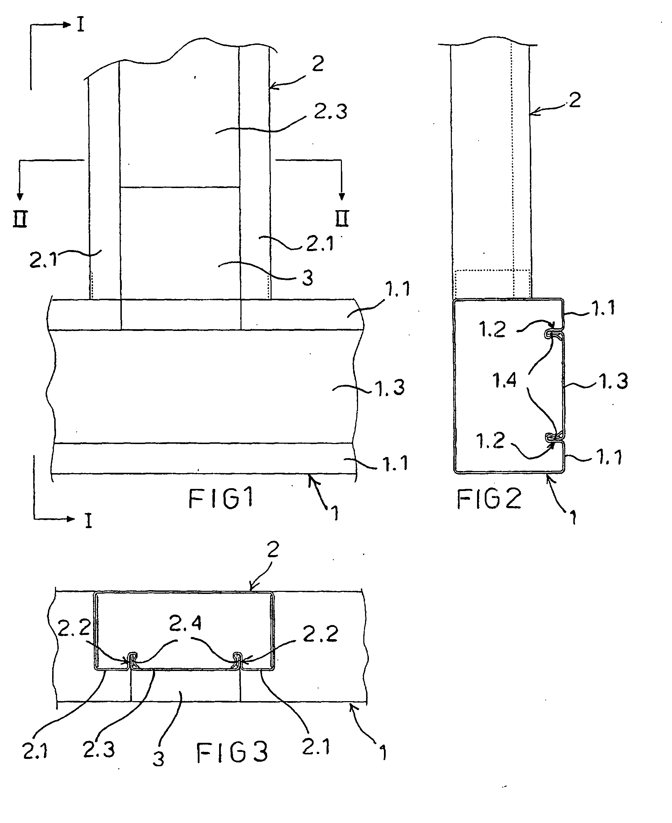

Figure 1 shows a duct junction according to the invention between a horizontal duct and a protruding vertical duct seen in a vertical view against a wall.

Figure 2 shows a vertical section through the horizontal duct along line I-I on figure 1.

Figure 3 shows a horizontal section through the vertical duct along line II-II on figure 1.

Figure 4 shows a disassembled view of the duct junction according to figures 1-3.

The duct junction shown in the figures is arranged between one first wall-mounted horizontal first duct 1 and protruding from this, one vertical second duct 2. The first duct 1 shows a U-shaped cross section where the open side of duct 1 is enclosed by the walls of duct 1 inwards directed flanges 1.1 which in its turn show edges 1.2 folded in towards the bottom of the duct 1. The opening in the first duct 1 is covered with an elongated front panel 1.3 showing inward folded edges 1.4. In the same way the second duct 2 also shows a U-shaped cross section with an opening enclosed by inwards directed flanges 2.1 with inward folded edges 2.2. The opening in the second duct 2 is also covered with an elongated front panel 2.3 showing inward folded edges 2.4.

The first duct 1 shows at its upper side an aperture 1.5 intended for the distribution of cables between both ducts 1, 2. The aperture 1.5 extends a bit from the bottom in the first duct 1 and out through the upper flange 1.1 so that cables may be lead between the ducts 1., 2 without any need to be threaded through closed holes in the side of the duct 1. The extension of the aperture 1.5 in the longitudinal direction of the first duct 1 is equal to the width of the opening and the front 2.3 in the second duct 2 respectively. In the figures, the sides of the first horizontal duct 1 show a depth that is greater than the corresponding sides of the second vertical duct 2.

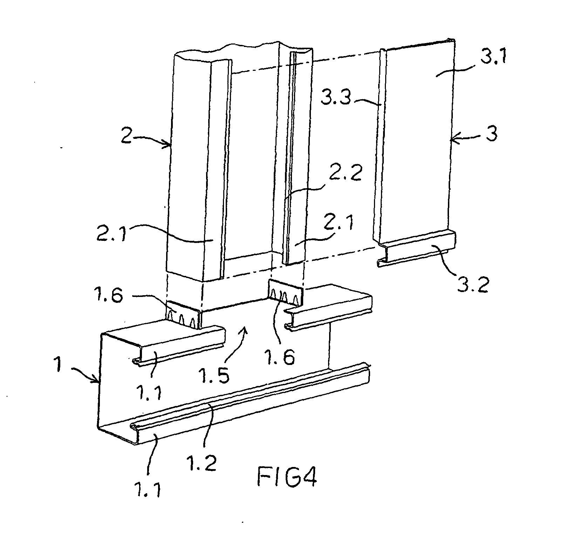

When assembled, the above mentioned apertures 1.5 are visible both along a section of the upper side of the first duct 1 and in the connecting flange 1.2. That is evident from the disassembled view in figure 4. The lower end of the front panel 2.3 is located at a distance from the upper side of the first duct 1 and leaves thus an opening that connects with the apertures 1.5 in the first duct 1. When the ducts are assembled, the aperture 1.5 as well as the opening that is left in the second duct 2 is covered with a front plate 3 showing partly a back section 3.1 which coincides with the front panel 2.3 of the second duct 2, partly a front section 3.2 which coincides with the profile at the upper side of the first duct 1. The upper side of the first duct 1 is preferably provided with outwards folded tabs 1.6 that are punched from the side of the duct and through which the second duct 2 may be attached to the aperture 1.5 in a desired position.

The front panels 1.3 and 2.3 respectively of the first duct 1 and the second duct 2 respectively are kept in place by means of elastic double folded edges 1.2 and 2.2 respectively along the flanges 1.1 and 2.1 respectively of the ducts 1, 2 in which the inward folded edges 1.4, 2.4 of the front panels 1.3, 2.3 coincide.

In an alternative embodiment of the duct junction according to the invention the lower section 3.2 of the front plate 3 may extend across the front opening in the first duct 1, the front panel 1.3 in this duct being connected with the sides of the front plate 3. In another alternative embodiment of the invention the back section of the front plate 3 may be omitted, the front plate 3 showing only a lower section which then may be designed according to the embodiments described above. The front plate 3 also shows inward folded edges 3.3 by means of which it is kept in place by means of the elastic double folded edges 2.2 of the inward folded flanges 2.1 in the second duct 2 according to the example in figure 4.

It also lies within the scope of the invention to let both ducts 1, 2 have the same depth, i.e. sides with equal depth. In the present embodiment, the front plate 3 extends in alignment down either over the upper flange 1.1 of the first duct 1 or right across its opening.

## Claims

1. Duct junction for the distribution of cables between two connecting perpendicular ducts (1, 2), each of which showing a cross section comprising two sides and one bottom in between and one open side intended to be covered by a front panel (1.3, 2.3), a first duct (1) showing one or more apertures in that side to which a second duct (2) connects with its short side, wherein the first duct (1) shows an aperture (1.5) that extends to the front opening in the duct (1) and that the section of the aperture being in front of the cross section of the second duct (2) is covered by a front plate, **characterized in that** the side of the first duct (1) has a greater depth than the side of the second duct (2) and that the front plate (3) shows partly a back part (3.1) connecting to the front panel (2.3) in the second duct (2), partly a fore part (3.2) with a cross section profile which coincides with the cross section profile at the side being in close contact with the first duct (1).

2. Duct junction according to claim 1, **characterized in that** the front section (3.2) also comprises a section which covers the open side of the duct (1) and connects to the front panel (1.3) in the first duct (1).

3. Duct junction according to claim 1 or 2 , **characterized in that** the aperture (1.5) in the first duct (1) is enclosed by guiding members protruding from the side of the duct (1) and has contact with the inner sides of the second duct (2).

## Patentansprüche

1. Kanalverbindung für die Verteilung von Kabeln zwischen zwei miteinander verbundenen senkrechten Kanälen (1, 2), die jeweils einen Querschnitt mit zwei Seiten und einem Boden dazwischen und einer offenen Seite, die durch eine Vorderplatte (1.3, 2.3) bedeckt werden soll, aufweisen, wobei ein erster Kanal (1) eine oder mehrere Öffnungen in der Seite aufweist, mit der ein zweiter Kanal (2) mit seiner kurzen Seite verbunden ist, wobei der erste Kanal (1) eine Öffnung (1.5) aufweist, die zur Vorderöffnung im Kanal (1) verläuft, und der vor dem Querschnitt des zweiten Kanals (2) befindliche Abschnitt der Öffnung durch eine Vorderplatte bedeckt ist, **dadurch gekennzeichnet, daß** die Seite des ersten Kanals (1) eine größere Tiefe aufweist als die Seite des zweiten Kanals (2) und daß die Vorderplatte (3) teilweise einen Rückenteil (3.1), der mit der Vorderplatte (2.3) im zweiten Kanal (2) verbunden ist, und teilweise einen Vorderteil (3.2) mit einem Querschnittsprofil, das mit dem Querschnittsprofil auf der in engem Kontakt mit dem ersten Kanal (1) stehenden Seite zusammenfällt, aufweist.

2. Kanalverbindung nach Anspruch 1, **dadurch gekennzeichnet, daß** der Vorderabschnitt (3.2) des weiteren einen die offene Seite des Kanals (1) bedeckenden und mit der Vorderplatte (1.3) im ersten Kanal (1) verbundenen Abschnitt umfaßt.

3. Kanalverbindung nach Anspruch 1 oder 2, **dadurch gekennzeichnet, daß** die Öffnung (1.5) im ersten Kanal (1) durch von der Seite des Kanals (1) ragende Führungsglieder umschlossen wird und mit den Innenseiten des zweiten Kanals (2) in Kontakt steht.

## Revendications

1. Raccord de conduite pour la distribution de câbles, entre deux conduites de raccordement perpendiculaires (1, 2), chacune présentant une section transversale comprenant deux parois et un fond entre ceux-ci et un côté ouvert destiné à être couvert par un panneau avant (1.3, 2.3) une première conduite (1) présentant une ou plusieurs ouvertures sur la paroi à laquelle une seconde conduite (2) se raccorde avec sa face courte, dans lequel la première conduite (1) présente une ouverture (1.5) qui s'étend vers l'ouverture avant dans la conduite (1) et dans lequel la section de l'ouverture qui est en face de la section transversale de la seconde conduite (2) est recouverte par une plaque avant,
**caractérisé en ce que** ladite face de la première conduite (1) a une profondeur plus grande que la face de la seconde conduite (2) et **en ce que** la plaque avant (3) montre partiellement une partie arrière (3.1) qui se raccorde au panneau avant (2.3) dans la seconde conduite (2), et partiellement une partie avant (3.2) avec un profil de section transversale qui coïncide avec le profil de section transversale de la face qui est proche avec la première conduite (1).

2. Raccord de conduite selon la revendication 1, **caractérise en ce que** la section avant (3.2) comprend également une section qui recouvre le côté ouvert de la conduite (1) et qui se raccorde au panneau avant (1.3) dans la première conduite (1).

3. Raccord de conduite selon la revendication 1 ou 2, **caractérisé en ce que** l'ouverture (1.5) dans la première conduite (1) est entourée par des éléments de guidage faisant saillie depuis la face de la conduite (1) et a un contact avec les côtés internes de la seconde conduite (2).
